# EUROPEAN PATENT APPLICATION

(11) **EP 4 428 420 A1**
(43) Date of publication of application: **11.09.2024**
(21) Application number: 22889652.8
(22) Date of filing: 06.09.2022
(51) Int. Cl.: F16K 37/00

(54) **SENSOR DEVICE AND LOGIC VALVE COMPRISING SAME**

(30) Priority: 05.11.2021 JP 2021180992
(71) Applicant: KAWASAKI JUKOGYO KABUSHIKI KAISHA, Kobe-shi, Hyogo 650-8670 (JP)
(72) Inventor: TANAKA, Tatsuki, Hyogo 650-8670 (JP)
(74) Representative: EIP
(86) International application number: PCT/JP2022/033408
(87) International publication number: WO 2023/079827

(57) **Abstract**

A sensor device is a sensor device included in a logic valve in which a valve body is movably provided in a housing, and the sensor device includes a cover to be placed over the housing; a shaft movably provided in the cover; a biasing member for shaft that makes the valve body and the shaft move in conjunction with each other by pressing the shaft against the valve body; and a sensor that is attached to the cover and detects motion of the shaft.

## Description

### Technical Field

The present invention relates to a sensor device included in a logic valve.

### Background Art

In a logic valve, the position of the valve body of the logic valve is detected so as to sense the operation state. As one example of such a logic valve, for example, a logic valve of PTL 1 is known. In the logic valve of PTL 1, a slider moves in conjunction with the valve body. And, by detecting the position of the slider by a proximity switch, the position of the valve body is detected.

### Citation List

### Patent Literature

PTL 1: Japanese Patent Publication No. 5477069

### Summary of Invention

### Technical Problem

In the logic valve of PTL 1, the proximity switch is attached to the cover. Also, the sleeve accommodating the valve body is screwed with the cover, and the sleeve and the cover are integrally structured. Therefore, if one intends to mount the proximity switch later in the logic valve, the valve body should be replaced as well.

In light of the above, it is an object of the present invention to provide a sensor device capable of reducing the number of parts to be replaced when applied to a logic valve, and a logic valve including the sensor device.

### Solution to Problem

A sensor device according to the present invention is a sensor device included in a logic valve in which a valve body is movably provided in a housing, and the sensor device includes a cover to be placed over the housing; a shaft movably provided in the cover; a biasing member for shaft that makes the valve body and the shaft move in conjunction with each other by pressing the valve body against the shaft; and a sensor that is attached to the cover and detects motion of the shaft.

According to the present invention, since such a structure that conjunction is achieved by pressing the shaft against the valve body is employed, it is possible to configure a logic valve capable of detecting the operation state of the valve body by placing the sensor device over the housing. Therefore, it is possible to apply the sensor device to the logic valve without replacing the valve body, and thus it is possible to reduce the number of parts to be replaced.

A logic valve of the present invention includes: the aforementioned sensor device; the housing; the valve body provided in the housing movably between an open position and a closed position; and a biasing member for valve body that biases the valve body toward the closed position, and the sensor device is attached to the housing such that the cover is placed over the housing.

According to the present invention , it is possible to configure the logic valve having the function as described above.

### Advantageous Effects of Invention

According to the present invention, it is possible to reduce the number of parts to be replaced in application to a logic valve.

The above objects, other objects, features, and merits of the present invention will be apparent from the detailed description of the following preferred embodiments by reference to attached drawings.

### Brief Description of Drawings

Fig. 1 is a sectional view showing a logic valve having a sensor device according to Embodiment 1 of the present invention.
Fig. 2 is a sectional view showing an open state of the logic valve of Fig. 1.
Fig. 3 is an exploded view showing the logic valve of Fig. 1 exploded into a sensor device and a valve section.
Fig. 4 is a sectional view showing a logic valve including a sensor device according to Embodiment 2 of the present invention.
Fig. 5 is a sectional view showing a logic valve including a sensor device according to Embodiment 3 of the present invention.
Fig. 6 is a sectional view showing a logic valve including a sensor device according to Embodiment 4 of the present invention.

### Description of Embodiments

Hereinafter, logic valves 2, 2A to 2C respectively including sensor devices 1, 1A to 1C of Embodiments 1 to 4 according to the present invention are described by referring to the aforementioned drawings. The concept of the direction used in the following description is merely used for convenience in description, and should not be understood to limit the orientation or the like of the configuration of the invention to the described direction. The sensor devices 1, 1A to 1C and the logic valves 2, 2A to 2C described below each are merely one embodiment of the present invention. Therefore, the present invention is not limited to the embodiments, and addition, deletion, and modification can be made without departing from the scope of the invention.

### [Embodiment 1]

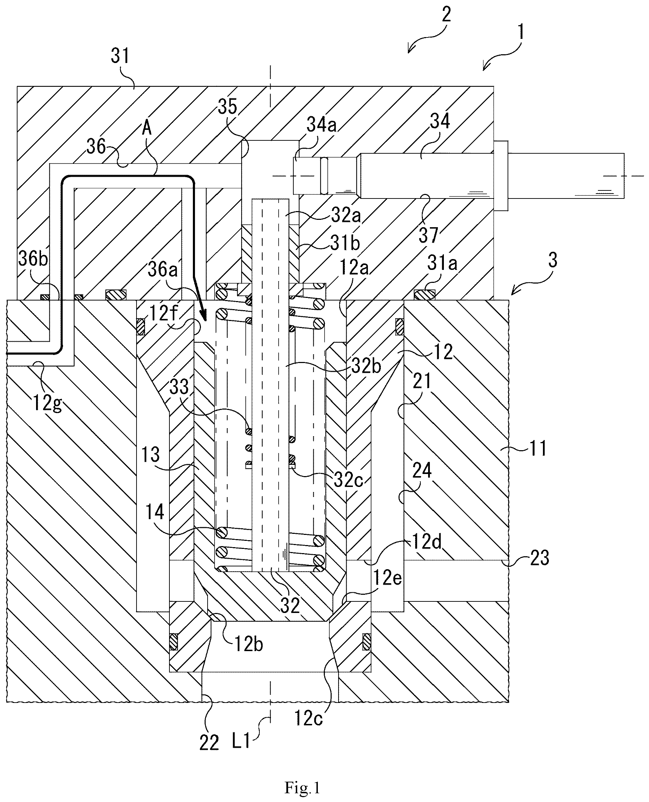

As shown in Fig. 1, a sensor device 1 according to Embodiment 1 is included in a logic valve 2. In the logic valve 2, a valve body 13 is movably provided in a housing 11. The logic valve 2 controls the flow of hydraulic fluid (e.g., water and oil) by moving the valve body 13 in accordance with an input pressure signal. For example, the logic valve 2 controls at least one of the flow direction, flow rate, and pressure of the hydraulic fluid. To be more specific, the logic valve 2 includes the housing 11, a sleeve 12, the valve body 13, the sensor device 1, and a first biasing member 14.

### <Housing>

In the housing 11, the valve body 13 is movably provided. To be more specific, the housing 11 has a valve accommodating recess 21, a first channel 22, and a second channel 23. The valve accommodating recess 21 is a bottomed hole, and is formed along a predetermined axial line L1. In the present embodiment, the valve accommodating recess 21 is a bottomed hole with a circular cross section, and is open on one side in the axial direction along the axial line L1. The first channel 22 is a channel through which the hydraulic fluid flows. To be more specific, the first channel 22 is formed along the axial line L1 and opens in the bottom surface of the valve accommodating recess 21. The second channel 23 is also a channel through which the hydraulic fluid flows. To be more specific, the second channel 23 extends in a direction intersecting with the axial line L1 (orthogonal direction in the present embodiment). And, the second channel 23 is open in the circumferential surface of the valve accommodating recess 21.

### <Sleeve>

The sleeve 12 has a valve chamber 12a, and slidably holds the valve body 13 in the valve chamber 12a. The sleeve 12 is configured such that the valve 13 can be seated. More specifically, the sleeve 12 is formed to have a tubular shape. In the present embodiment, the sleeve 12 is formed into a cylindrical shape in correspondence with the valve accommodating recess 21. Further, the sleeve 12 is inserted through the valve accommodating recess 21. Also, both end parts of the sleeve 12 achieve sealing with the circumferential surface of the valve accommodating recess 21, and between the intermediate part of the sleeve 12 and the circumferential surface of the valve accommodating recess 21, an annular passage 24 is formed. The annular passage 24 connects to the second channel 23. Also, the inner hole of the sleeve 12 forms the valve chamber 12a. Also, the sleeve 12 has a valve seat 12b, a valve hole 12c, and a communication passage 12d.

The valve seat 12b is formed on the inner circumferential surface of the sleeve 12. To be more specific, the valve seat 12b is formed in the opening on the other side in the axial direction in the sleeve 12. The valve seat 12b is configured such that the valve 13 can be seated thereon. The valve hole 12c is a hole formed on the inner side in the radial direction of the valve seat 12b. And, the valve hole 12c connects the valve chamber 12a of the sleeve 12 and the outside of the sleeve 12. On the outer circumferential surface of the sleeve 12, at least one communication passage 12d is formed. The communication passage 12d connects the valve chamber 12a (more specifically, later-described valve passage 12e) of the sleeve 12 and the outer side in the radial direction of the sleeve 12. In the present embodiment, the communication passage 12d penetrates the sleeve 12 in the radial direction. And, by the communication passage 12d and the annular passage 24, the valve chamber 12a (more specifically, later-described valve passage 12e) and the second channel 23 are connected.

### <Valve body>

The valve body 13 is provided in the housing 11 movably between an open position and a closed position. The valve body 13 is formed into a bottomed tubular shape having an inner hole. To be more specific, the valve body 13 is formed in correspondence with the shape of the valve chamber 12a. In the present embodiment, the valve body 13 is formed to have a cylindrical shape. The valve body 13 is slidably inserted into the sleeve 12. That is, the valve body 13 is provided in the housing 11 with the sleeve 12 interposed therebetween. And, the valve 13 is slidably inserted into the sleeve 12 with the bottom part facing toward the other side in the axial direction. And, the valve body 13 separates the valve chamber 12a into two spaces 12e, 12f. That is, the valve body 13 forms a valve passage 12e on the valve hole 12c side and a pilot chamber 12f on the opening side in the valve chamber 12a. Also, the valve body 13 is seated on the valve seat 12b. More specifically, the bottom of the valve body 13 is seated on the valve seat 12b. Further, the valve body 13 can move between the closed position where it is seated on the valve seat 12b, and the open position where it separates from the valve seat 12b. And, the valve body 13 closes the valve passage 12e at the closed position, and opens the valve passage 12e at the open position.

### <Sensor device>

The sensor device 1 detects the operation state of the valve body 13. To be more specific, the sensor device 1 detects the open state of the valve body 13. The sensor device 1 is not limited to that detecting the open state of the valve body 13, but may detect the closed state of the valve body 13. To be more specific, the sensor device 1 includes a cover 31, a shaft 32, a second biasing member 33, and a sensor 34.

### <Cover>

The cover 31 is placed over the housing 11. To be more specific, the cover 31 is placed over the housing 11 such that it occludes the valve chamber 12a. Also, the cover 31 is provided with a seal member 31a at a position corresponding to the valve chamber 12a. In the present embodiment, the seal member 31a is arranged to surround the valve chamber 12a, and seals around the valve chamber 12a. The cover 31 has an accommodating chamber 35, a pilot passage 36, and a sensor insertion hole 37.

The accommodating chamber 35 is formed in correspondence with the valve accommodating recess 21. To be more specific, the accommodating chamber 35 is a hole that is formed along the axial line L1, and extends in the axial direction. The accommodating chamber 35 is open on the other side in the axial direction, and the opening of the accommodating chamber 35 faces the valve accommodating recess 21. The hole diameter of the accommodating chamber 35 is formed to be smaller than the hole diameter of the valve accommodating recess 21. And, a guide member 31b in a cylindrical form is fitted with the accommodating chamber 35.

The pilot passage 36 guides the pilot pressure to the valve accommodating recess 21. To be more specific, the pilot passage 36 has two ports 36a, 36b. A first port 36a that is one port 36a connects to the valve accommodating recess 21. To be more specific, the first port 36a connects to the valve chamber 12a (more specifically, the pilot chamber 12f). A second port 36b that is the other port 36b connects to a passage 12g formed in the housing 11. To the second port 36b, pilot pressure is guided through the passage 12g. And, the pilot pressure is guided to the pilot chamber 12f via the pilot passage 36 and the first port 36a. Further, the pilot passage 36 also connects to the accommodating chamber 35 in the present embodiment, and the pilot pressure is guided also to the accommodating chamber 35.

The sensor insertion hole 37 is a hole into which the sensor 34 is inserted. To be more specific, the sensor insertion hole 37 is a hole formed on the outer circumferential surface of the cover 31. And, the sensor insertion hole 37 extends in the direction intersecting with the axial line L1 (orthogonal direction in the present embodiment) from the outer circumferential surface of the cover 31. Also, the sensor insertion hole 37 penetrates to the accommodating chamber 35, and connects to the accommodating chamber 35.

### <Shaft>

The shaft 32 is movably provided in the cover 31. To be more specific, the shaft 32 is a rod-like member made of metal. And, an end part on one side in the axial direction, namely one end part in the axial direction of the shaft 32 is movably inserted through the accommodating chamber 35 along the axial line L1 of the shaft 32. In the present embodiment, the shaft 32 is provided movably in the cover 31 by slidably inserting one end part in the axial direction through the guide member 31b. To be more specific, the shaft 32 has a site to be sensed 32a, and a body portion 32b.

The site to be sensed 32a forms one portion of the shaft 32a. In the present embodiment, the shaft 32 extends in the axial direction, and the site to be sensed 32a forms one end part in the axial direction of the shaft 32. That is, the site to be sensed 32a is inserted movably along the axial line L1 in the accommodating chamber 35 of the cover 31. In the present embodiment, the site to be sensed 32a is slidably inserted through the guide member 31b provided in the accommodating chamber 35.

The body portion 32b is a portion other than the site to be sensed 32a in the shaft 32, and protrudes on the other side in the axial direction from the accommodating chamber 35. And, the body portion 32b is inserted into the inner hole of the valve body 13. The body portion 32b extends to the bottom part of the valve body 13, and a tip end part of the body portion 32b comes into contact with the bottom part of the valve body 13. And, on the outer circumferential surface of he body portion 32b, a spring bearing portion 32c is provided.

### <Second biasing member>

The second biasing member 33, which is a biasing member for shaft, presses the shaft 32 against the valve body 13. And, the second biasing member 33 makes the valve body 13 and the shaft 32 move in conjunction with each other. The second biasing member 33 is a compression coil spring in the present embodiment. The second biasing member 33 is externally mounted on the body portion 32b of the shaft 32. The second biasing member 33 is arranged in a compressed state between the cover 31 (more specifically, the guide member 3 1b) and the spring bearing portion 32c. The second biasing member 33 biases the shaft 32 on the other side in the axial direction via the spring bearing portion 32c. Thereby, the second biasing member 33 presses the tip end part of the shaft 32 against the bottom part of the valve body 13.

### <Sensor>

The sensor 34 is attached to the cover 31. The sensor 34 detects motion of the shaft 32. To be more specific, the sensor 34 is formed into a circular column shape. Also, the sensor 34 has a sensing portion 34a at the tip end part. And, the sensor 34 is inserted into the sensor insertion hole 37 of the cover 31 such that the sensing portion 34a protrudes into the accommodating chamber 35. The sensor 34 is a non-contact type sensor, and is arranged so that the sensing portion 34a does not hit the site to be sensed 32a. And, the sensor 34 detects motion of the shaft 32 as the site to be sensed 32a reaches a predetermined detection position.

In the present embodiment, the sensor 34 is an inductive proximity sensor. Therefore, as the site to be sensed 32a made of metal approaches the sensing portion 34a, and reaches the detection position, the sensor 34 detects motion of the shaft 32. The detection position is set in accordance with the operation state of the valve body 13 that is desired to be detected. For example, in the case of detecting the open state in which the valve body 13 is located at the open position, the detection position is set to a position corresponding to the open position of the valve body 13. That is, the detection position is set at the position where the site to be sensed 32a reaches when the valve body 13 is located at the open position. In the present embodiment, the detection position is set at the position where the site to be sensed 32a reaches when the valve body 13 is located at the open position and the flow rate flowing in the valve passage 12e is a predetermined flow rate. For example, the detection position is set at the position where the site to be sensed 32a reaches when the valve body 13 is a predetermined distance away from the valve seat 12b, namely, the position where the site to be sensed 32a moves a predetermined distance from the open position.

### <First biasing member>

The first biasing member 14, which is a biasing member for valve body, biases the valve body 13 toward the closed position. To be more specific, the first biasing member 14 biases the valve body 13 to resist the pressing force that the valve body 13 receives from the hydraulic fluid flowing through the first channel 22. And, the first biasing member 14 makes the valve body 13 be seated on the valve seat 12b by biasing the valve body 13. The first biasing member 14 is a compression coil spring in the present embodiment. The first biasing member 14 is inserted into the inner hole of the valve body 13. And, the first biasing member 14 is arranged in a compressed state between the cover 31 and the bottom part of the valve body 13.

### <Operation of logic valve>

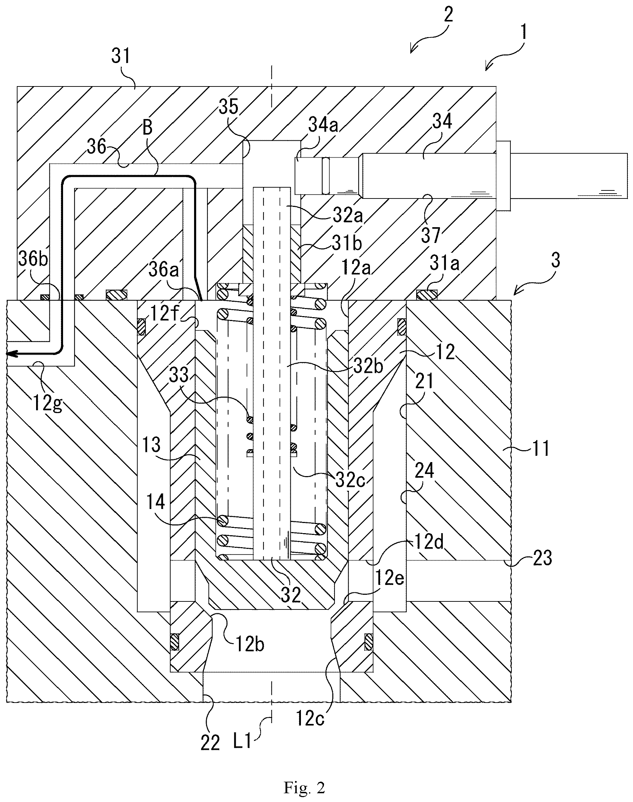

Hereinafter, operation of the logic valve 2 is described by referring to Figs. 1 and 2. In the logic valve 2, a control valve (not shown) is connected to the passage 12g of the housing 11. As pilot pressure is input to the passage 12g from the control value, the pilot pressure is guided to the pilot chamber 12f via the pilot passage 36 (see arrow A in Fig. 1). Accordingly, the valve body 13 is pressed toward the closed position by the pilot pressure. Note that the force that the shaft 32 receives from the pilot pressure is cancelled by guiding the pilot pressure to the accommodating chamber 35. Also, the valve body 13 is pressed toward the open position by the hydraulic fluid flowing through the first channel 22 and the valve passage 12e.
Therefore, when the pressing force by the pilot pressure and the biasing force by the first biasing member 14 become larger than the pressing force by the hydraulic fluid, the valve passage 12e is closed. On the other hand, when the passage 12g is connected to the tank by the control valve, and the pilot pressure in the pilot chamber 12f is discharged to the tank (see arrow B in Fig. 2), the pressing force by the pilot pressure and the biasing force by the first biasing member 14 become smaller than the pressing force by the hydraulic fluid. As a result, the valve body 13 separates from the valve seat 12b, and the valve passage 12e opens.

As the valve body 13 separates from the valve seat 12b, the shaft 32 moves on one side in the axial direction in conjunction with the valve body 13. Accordingly, the site to be sensed 32a moves on one side in the axial direction in the accommodating chamber 35. Then, as the site to be sensed 32a reaches the detection position, the sensor 34 detects that the valve body 13 is located in the open position. Thereby, the sensor device 1 detects that the valve body 13 is in the open state.

### installation of sensor device>

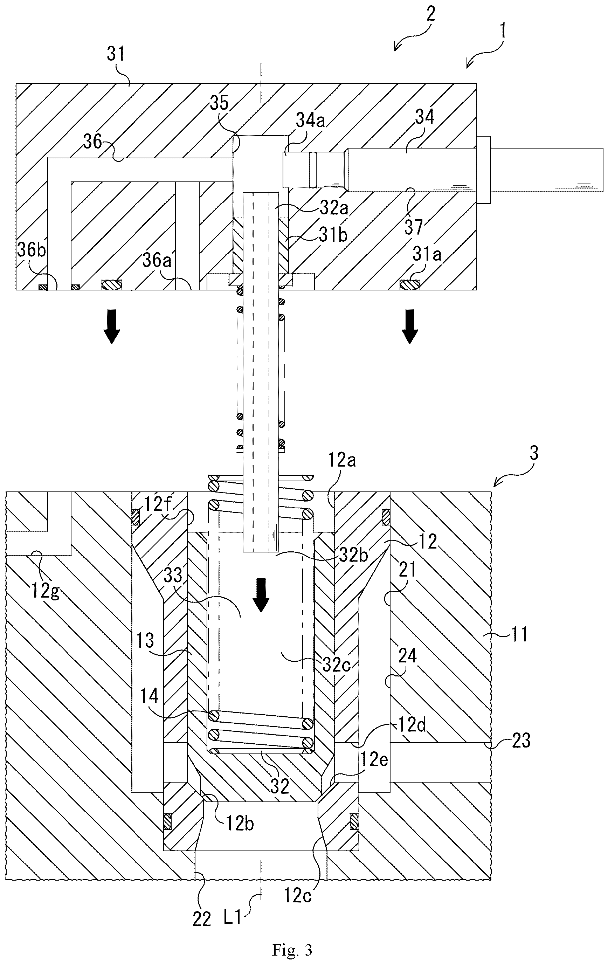

Hereinafter, one example of installation of the sensor device 1 in the logic valve 2 is described by referring to Fig. 3. First, in the logic valve 2, a valve section 3 and the sensor device 1 are respectively prepared. The valve section 3 is made up of the sleeve 12, the valve body 13, and the first biasing member 14 attached to the valve accommodating recess 21 of the housing 11. The valve section 3 may be part of an existing product, or may be newly produced.

Also, the sensor device 1 is assembled, for example, in the following manner. That is, the second biasing member 33 is externally mounted on the shaft 32. And, the guide member 31b is inserted into the accommodating chamber 35 of the cover 31. Further, in the cover 31, the site to be sensed 32a of the shaft 32 is inserted into the guide member 31b. Also, the sensor 34 is inserted into the sensor insertion hole 37 of the cover 31, and pressed until the sensing portion 34a protrudes into the accommodating chamber 35. Thereby, the sensor device 1 is assembled.

The assembled sensor device 1 is placed over the valve section 3 such that the valve chamber 12a is occluded by the cover 31. At this time, the shaft 32 is inserted into the inner hole of the valve body 13. And, after the placement, the cover 31 is attached to the housing 11. To be more specific, the cover 31 is fastened to the housing 11 by a fastening member such as a bolt (not shown). Thereby, the sensor device 1 can be installed in the logic valve 2.

In the sensor device 1 and the logic valve 2 of the present embodiment, the shaft 32 and the valve body 13 are made to move in conjunction with each other by pressing the shaft 32 against the valve body 13 . Therefore, it is possible to configure the logic valve 2 capable of detecting the operation state of the valve body 13 by placing the sensor device 1 over the housing 11. Therefore, it is possible to apply the sensor device 1 to the logic valve 2 without replacing the valve 13, and thus it is possible to reduce the number of parts to be replaced.

Further, in the sensor device 1 and the logic valve 2, it is possible to detect a desired operation state of the valve body 13 by setting the detection position in accordance with the operation state of the valve body 13 intended to be detected. For example, as in the present embodiment, by setting the detection position at the position of the site to be sensed 32a when the valve body 13 reaches the open position where the valve passage 12e is open, it is possible to detect the open state of the logic valve 2.

Further, in the sensor device 1 and the logic valve 2, by inserting the sensor 34 in the sensor insertion hole 37 of the cover 31, the sensor device 1 can be configured. Therefore, it is easy to incorporate the sensor 34 into the cover 31. Also, in the sensor device 1, since the second biasing member 33 is externally mounted on the shaft 32, it is possible to prevent the sensor device 1 from increasing in size in the axial direction of the shaft 32,

Also, in the logic valve 2 of the present embodiment, since the shaft 32 is inserted in the valve body 13, it is possible to prevent the logic valve 2 from increasing in length in the axial direction.

### [Embodiment 2]

The sensor device 1A and the logic valve 2A of Embodiment 2 are similar to the sensor device 1 and the logic valve 2 of Embodiment 1 in configuration. Therefore, the configuration of the sensor device 1A and the logic valve 2A of Embodiment 2 is described mainly about the point different from that of the sensor device 1 and the logic valve 2 of Embodiment 1, and the same configuration is denoted by the same reference numeral, and the description is omitted. The same applies also to the sensor devices 1B, 1C and the logic valves 2B, 2C of Embodiments 3 and 4.

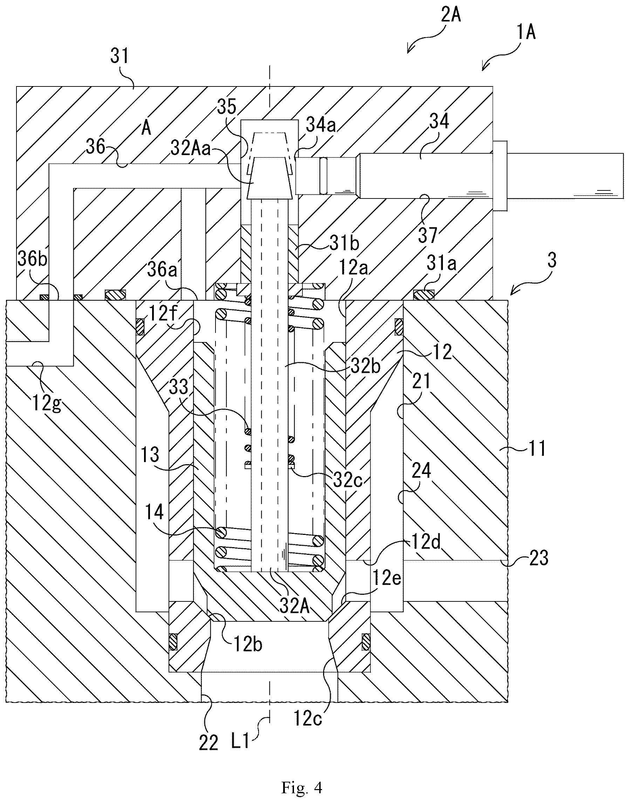

As shown in Fig. 4, the logic valve 2A includes the housing 11, the sleeve 12, the valve body 13, the sensor device 1A, and the first biasing member 14. The sensor device 1A includes the cover 31, a shaft 32A, the second biasing member 33, and the sensor 34. And, the shaft 32A has a site to be sensed 32Aa, and the body portion 32b. The site to be sensed 32Aa forms one end part in the axial direction of the shaft 32A. And, the site to be sensed 32Aa is formed such that the detection value detected by the sensor 34 varies depending on the position. To be more specific, the site to be sensed 32Aa is formed to have cross-section areas that are mutually different in the axial direction. In the present embodiment, the site to be sensed 32Aa is formed into a truncated cone shape that tapers off as it progresses on one side in the axial direction. Further, the site to be sensed 32Aa is arranged such that the outer circumferential surface faces with the sensing portion 34a of the sensor 34 regardless of the position of the shaft 32.

Also, the sensor 34 detects a detection value that varies depending on the position of the site to be sensed 32Aa. And, the sensor 34 detects the position of the site to be sensed 32Aa, namely the amount of movement of the shaft 32 on the basis of the detection value. For example, the sensor 34 is an inductive proximity sensor. The sensor 34, which is an inductive proximity sensor, can measure the distance to the site to be sensed 32Aa. Since the site to be sensed 32Aa has cross-section areas that are mutually different in the axial direction, the distance between the site to be sensed 32Aa and the sensor 34 varies as the site to be sensed 32Aa moves. Therefore, the sensor 34 can detect the amount of movement of the shaft 32, namely the amount of movement of the valve body 13 on the basis of the variation in distance.

In the sensor device 1A and the logic valve 2A of Embodiment 2, since the detection value varies depending on the position of the site to be sensed 32Aa, it is possible to detect the amount of movement on the basis of the detection value.

Besides the above, the sensor device 1A and the logic valve 2A of Embodiment 2 have the same operation and effect as the sensor device 1 and the logic valve 2 of Embodiment 1.

### [Embodiment 3]

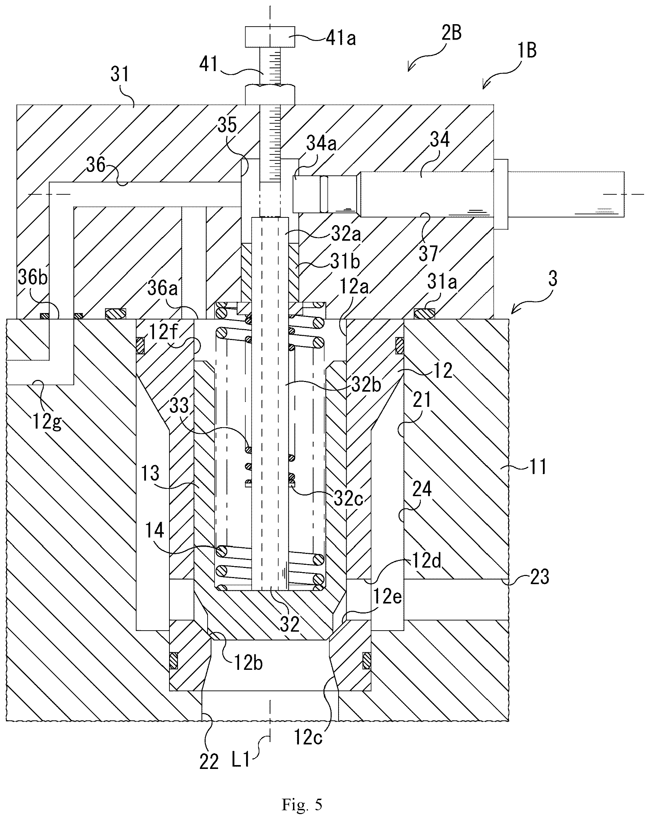

As shown in Fig. 5, the logic valve 2B of Embodiment 3 includes the housing 11, the sleeve 12, the valve body 13, the sensor device 1B, and the first biasing member 14. Also, the sensor device 1B of Embodiment 3 includes the cover 31, the shaft 32, the second biasing member 33, the sensor 34, and a stopper 41.

The stopper 41 is attached to the cover 31. And, the stopper 41 prevents the valve body 13 from moving toward the open position from the closed position via the shaft 32. To be more specific, the stopper 41 penetrates through the cover 31 in the axial direction. A tip end part of the stopper 41 protrudes into the accommodating chamber 35. The stopper 41 is capable of advancing and retreating in the axial direction. To be more specific, the stopper 41 is screwed with the cover 31. And, the stopper 41 has an operating portion 41a in a base end part. Therefore, the stopper 41 advances and retracts in the axial direction by rotating the operating portion 41a. For example, by rotating the operating portion 41a, the stopper 41 can press the tip end part against the end part of one side in the axial direction of the shaft 32. Accordingly, motion of the shaft 3 is restricted. Thereby, the stopper 41 is capable of preventing the valve body 13 from moving toward one side in the axial direction (namely, motion from closed position to open position) via the shaft 32. Thus, in the sensor device 1B, it is possible to keep the valve body 13 at the closed position by the stopper 41. Also, when the tip end part of the stopper 41 is separated from the shaft 32 by rotating the operating portion 41a, the shaft 32 can move in the axial direction. Thus, the valve body 13 also can move between the closed position and the open position.

Besides the above, the sensor device 1B and the logic valve 2B of Embodiment 3 have the same operation and effect as the sensor device 1 and the logic valve 2 of Embodiment 1.

### [Embodiment 4]

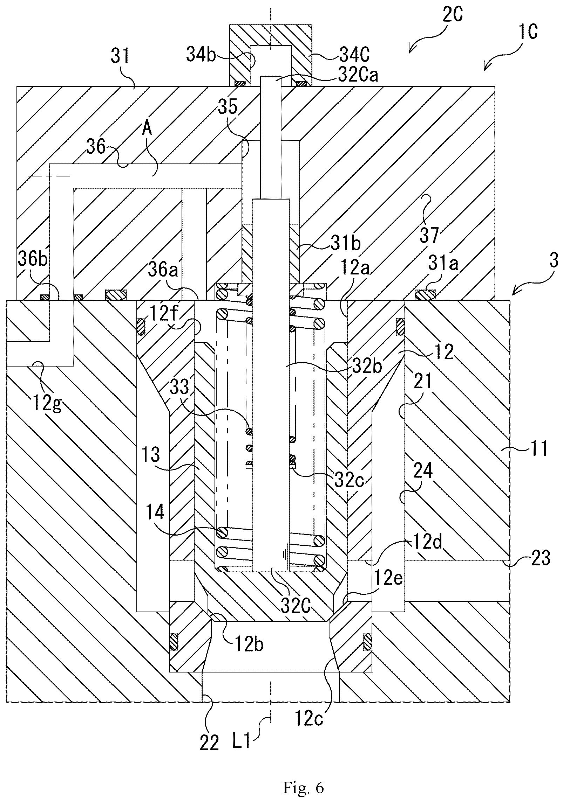

As shown in Fig. 6, the logic valve 2C of Embodiment 4 includes the housing 11, the sleeve 12, the valve body 13, the sensor device 1C, and the first biasing member 14. Also, the sensor device 1C of Embodiment 3 includes the cover 31, a shaft 32C, the second biasing member 33, and a sensor 34C.

The shaft 32C makes a site to be sensed 32Ca protrude outward from the cover 31. To be more specific, in the shaft 32C, a portion on one side in the axial direction of the body portion 32b penetrates through the cover 31.

The sensor 34C is provided to surround the site to be sensed 32Ca. To be more specific, the sensor 34C is provided in such a state that sealing is achieved on the outer circumferential surface on one side in the axial direction of the cover 31 (ceiling surface in the present embodiment). Also, the sensor 34 has an inner space 34b, and movably accommodates the site to be sensed 32Ca movably in the inner space 34b. In the present embodiment, the sensor 34 is, for example, a differential transformer-type linear sensor, and generates an electric signal in accordance with the amount of movement of the site to be sensed 32Ca. Thereby, the lift amount of the shaft 32C and the valve body 13 can be detected by the sensor 34.

In the sensor device 1C and the logic valve 2 of Embodiment 4, since the sensor device 1 can be configured by attaching the sensor 34 outside the cover 31, it is easy to attach the sensor 34 to the cover 31.

Besides the above, the sensor device 1C and the logic valve 2C of Embodiment 4 have the same operation and effect as the sensor device 1 and the logic valve 2 of Embodiment 1.

### [Other embodiments]

In the sensor devices 1, 1A to 1C of Embodiments, the valve body 13 is formed to have a bottomed tubular shape, however, the valve body 13 may be solid. Also, the detection position is not necessarily a position corresponding to the open position. For example, the detection position may be a closed position. The sites to be sensed 32a, 32Aa form end parts on one side in the axial direction of the shafts 32, 32A, however, they may be formed in intermediate parts in the axial direction of the shafts 32, 32A. In the logic valve 2, the valve body 13 does not necessarily include the sleeve 12. That is, the valve body 13 may be provided directly in the housing 11.

Various modifications and other embodiments of the present invention will be apparent to those skilled in the art from the above description. Accordingly, the above description should be interpreted merely as illustration, and is provided for the purpose of indicating the best mode for carrying out the present invention to those skilled in the art. The details of the structure and/or the function can be substantially changed without departing from the spirit of the present invention.

## Claims

1. A sensor device included in a logic valve in which a valve body is movably provided in a housing, the sensor device comprising:
a cover to be placed over the housing;
a shaft movably provided in the cover;
a biasing member for the shaft that makes the valve body and the shaft move in conjunction with each other by pressing the shaft against the valve body; and
a sensor that is attached to the cover and detects motion of the shaft.

2. The sensor device according to claim 1, wherein
the shaft has a site to be sensed, and
the sensor detects motion of the shaft when the site to be sensed reaches a predetermined detection position.

3. The sensor device according to claim 1 or 2, wherein
the shaft has a site to be sensed, and
the site to be sensed is formed such that a detection value detected by the sensor varies depending on the position.

4. The sensor device according to claim 2 or 3, wherein
the cover has an accommodating chamber,
the site to be sensed is movably accommodated in the accommodating chamber, and
the sensor has a sensing portion in a tip end part, and is inserted through the cover such that the sensing portion protrudes into the accommodating chamber.

5. The sensor device according to claim 2 or 3, wherein
the shaft makes the site to be sensed protrude outward from the cover, and
the sensor is provided such that it surrounds the site to be sensed.

6. The sensor device according to any one of claims 1 to 5, further comprising a stopper that is attached to the cover, and prevents the valve body from moving from a closed position to an open position via the shaft.

7. The sensor device according to any one of claims 1 to 6, wherein the biasing member for the shaft is externally mounted on the shaft.

8. A logic valve comprising:
the sensor device according to any one of claims 1 to 7;
the housing;
the valve body provided in the housing movably between an open position and a closed position; and
a biasing member for valve body that biases the valve body toward the closed position,
the sensor device being attached to the housing such that the cover is placed over the housing.

9. The logic valve according to claim 8, wherein
the valve body is formed into a bottomed tubular shape having an inner hole,
the shaft is inserted into the inner hole of the valve body, and
the biasing member for shaft presses the shaft against a bottom part of the valve body.
